# EUROPÄISCHE PATENTSCHRIFT

(11) **EP 3 601 971 B1**
(45) Veröffentlichungstag und Bekanntmachung des Hinweises auf die Patenterteilung: **16.02.2022**
(21) Anmeldenummer: 18709258.0
(22) Anmeldetag: 22.02.2018
(51) Int. Cl.: B65D 33/16, G01K 11/12, B65D 33/34

(54) **SICHERHEITSBEUTEL AUS KUNSTSTOFF**
PLASTIC SECURITY BAG
SAC DE SÉCURITÉ EN PLASTIQUE

(30) Priorität: 27.03.2017 DE 102017002941
(43) Veröffentlichungstag der Anmeldung: 05.02.2020
(73) Patentinhaber: Anton Debatin GmbH Werk für werbende Verpackung, 76646 Bruchsal (DE)
(72) Erfinder: ROSE, Thomas, 69121 Heidelberg (DE)
(74) Vertreter: Lichti - Patentanwälte Partnerschaft mbB
(86) Internationale Anmeldenummer: PCT/EP2018/000068
(87) Internationale Veröffentlichungsnummer: WO 2018/177584

(56) Entgegenhaltungen:
- EP-A1- 1 977 977
- EP-A2- 1 026 095
- DE-A1-102013 009 628

## Beschreibung

Die Erfindung betrifft einen Sicherheitsbeutel aus Kunststoff insbesondere zum Einhängen in einen Tresor, mit zumindest zwei aufeinander angeordneten Folienlagen aus einem 1. Kunststoff, die mittels einer Schweißnaht unter Bildung einer Zugangsöffnung zu einem zwischen den Folienlagen gebildeten Innenraum miteinander verbunden sind, wobei zumindest eine der Folienlagen zumindest abschnittsweise einen 1. Thermoindikator aufweist, der mit einem Farbumschlag reagiert, wenn er einer Temperatur oberhalb einer 1. Erweichungstemperatur des 1. Kunststoffes der Folienlagen ausgesetzt ist.

In vielen Verkaufsstellen, Läden oder Tankstellen ist man bemüht, den Bestand an frei verfügbarem Bargeld zu reduzieren, um das Risiko von Überfällen zu verringern. Zu diesem Zweck werden in den Verkaufsstellen kleine Tresore aufgestellt und das Verkaufspersonal kann Geldscheine im Laufe der Zeit in den Tresor einfüllen, wo sie sicher aufgenommen sind. Innerhalb des Tresors ist ein aus Kunststoff bestehender Sicherheitsbeutel angeordnet und so aufgespannt, dass eine Einfüll- oder Zugangsöffnung offensteht.

Der Sicherheitsbeutel besteht üblicherweise aus zwei Folienlagen eines Kunststoffes, die rechteckig ausgebildet sind und aufeinander liegen. An drei Seitenkanten sind die beiden Folienlagen miteinander verbunden, beispielsweise infolge einer Faltung und einer zweiseitigen Schweißnaht oder mittels einer dreiseitigen Schweißnaht. An der 4., üblicherweise stirnseitigen Seitenkante sind die Folienlagen unverbunden, so dass dort die Zugangsöffnung zu dem zwischen den Folienlagen gebildeten Innenraum des Sicherheitsbeutels gebildet ist.

Wenn der in dem Tresor befindliche Sicherheitsbeutel um ein vorbestimmtes Maß mit Geldscheinen gefüllt ist, muss er ausgewechselt werden. Bevor ein Benutzer den Sicherheitsbeutel aus dem Tresor entnehmen kann, wird dieser automatisch verschlossen, indem zwei beheizte Schweißbacken von entgegengesetzten Seiten des Sicherheitsbeutels zusammenfahren und den Sicherheitsbeutel zwischen sich einklemmen. Die Schweißbacken sind dabei auf eine Temperatur erwärmt, die der Erweichungstemperatur des Kunststoffes des Sicherheitsbeutels entspricht oder um ein geringes Maß oberhalb von dieser liegt.

Als Erweichungstemperatur wird im Rahmen dieser Anmeldung diejenige Temperatur eines Kunststoffmaterials und insbesondere eines thermoplastischen Kunststoffmaterials verstanden, bei der das Kunststoffmaterial zumindest teilweise plastifiziert ist und somit verschweißt werden kann.

Aufgrund der Erwärmung der beiden Folienlagen des Sicherheitsbeutels auf die Erweichungstemperatur des Kunststoffmaterials des Sicherheitsbeutels und aufgrund des von den beiden Schweißbacken ausgeübten Drucks werden die Folienlagen unterhalb der Zugangsöffnung über die gesamte Breite miteinander verschweißt und verschlossen. Somit ist der Innenraum des Sicherheitsbeutels von vier umlaufenden Schweißnähten unzugänglich begrenzt.

Um dem Benutzer anzuzeigen, dass die von den Schweißbacken ausgebildete Schweißnaht korrekt und über die gewünschte Länge ausgebildet ist, ist in den Sicherheitsbeutel ein Thermoindikator integriert. Der Thermoindikator ist üblicherweise von einer Lackschicht gebildet, die auf den dem Innenraum des Sicherheitsbeutels abgewandten Außenseiten der Folienlagen des Sicherheitsbeutels in dem Bereich aufgebracht ist, der beim Verschließen des Sicherheitsbeutels mit den Schweißbacken in Anlage kommt. Der Thermoindikator bzw. der Thermolack ist so ausgebildet, dass er mit einem Farbumschlag reagiert, wenn er einer Temperatur ausgesetzt wird, die oberhalb der Erweichungstemperatur des Kunststoffmaterials der Folienlagen liegt. Beim Verschweißen der Folienlagen erfolgt somit der Farbumschlag des Thermoindikators, der vom Benutzer gut wahrgenommen werden kann.

Es hat sich gezeigt, dass an den gefüllten und durch Schweißung verschlossenen Sicherheitsbeuteln häufig Manipulationen versucht werden. Insbesondere wird versucht, die Schweißnaht mit einem scharfen Messer aufzuschlitzen, dann Geld aus dem Innenraum des Sicherheitsbeutels zu entnehmen und die Folienlagen wieder zu verschweißen, indem man sie mit einem Schweißgerät bzw. mit Schweißbacken der genannten Art auf eine Temperatur oberhalb der Erweichungstemperatur des Kunststoffmaterials des Sicherheitsbeutels erwärmt und somit wieder verbindet. Diese nachträgliche 2. Verschweißung der Folienlagen des Sicherheitsbeutels ist nachträglich nur sehr schwer erkennbar, so dass viele Manipulationen unbemerkt bleiben. Aus diesem Grund werden die Sicherheitsbeutel der genannten Art von einigen Banken nicht mehr als Sicherheits-Transportmittel akzeptiert.

EP 1 977 977 A1, DE 10 2013 009 628 A1 und EP 1 026 095 A2 offenbaren jeweils einen Sicherheitsbeutel aus Kunststoff mit einem Thermoindikator.

Der Erfindung liegt die Aufgabe zugrunde, einen Sicherheitsbeutel der genannten Art derart weiterzubilden, dass eine Manipulation und insbesondere eine nochmalige Verschweißung sicher und deutlich erkennbar angezeigt wird.

Diese Aufgabe wird erfindungsgemäß durch einen Sicherheitsbeutel mit den Merkmalen des Anspruchs 1 gelöst.

Der erfindungsgemäße Sicherheitsbeutel ist aus zumindest zwei aufeinander angeordneten Folienlagen aus einem 1. Kunststoff gebildet, die mittels einer Schweißnaht miteinander verbunden sind. Zwischen den Folienlagen ist ein Innenraum gebildet, der durch eine Zugangsöffnung erreichbar ist, an der die beide Folienlagen nicht miteinander verschweißt sind. Zumindest eine der Folienlagen und vorzugsweise beide Folienlagen weisen zumindest abschnittsweise einen 1. Thermoindikator auf, der mit einem Farbumschlag reagiert, wenn er einer Temperatur oberhalb einer 1. Erweichungstemperatur des 1. Kunststoffs der Folienlagen ausgesetzt ist.

Erfindungsgemäß ist dabei vorgesehen, dass der 1. Thermoindikator zumindest abschnittsweise von einer Abdeckung aus einem 2. Kunststoff überdeckt ist, wobei eine 2. Erweichungstemperatur des 2. Kunststoffs um zumindest 20°C höher als die 1. Erweichungstemperatur des 1. Kunststoffs ist, und wobei der 1. Kunststoff der Folienlagen bei Einwirkung der 2. Erweichungstemperatur einer Beschädigung in Form einer Verformung und/ oder einer Verbrennung und/oder einer Verflüssigung unterliegt.

Vorzugsweise ist die 2. Erweichungstemperatur des 2. Kunststoff um zumindest 85°C und insbesondere um zumindest 105°C höher als die 1. Erweichungstemperatur des 1. Kunststoffs. Wenn der erfindungsgemäße Sicherheitsbeutel in üblicher Weise innerhalb des Tresors durch zwei gegeneinander verfahrbare Schweißbacken verschweißt wird, reagiert der 1. Thermoindikator mit einem Farbumschlag und zeigt dies in üblicher Weise an.

Wenn an dieser Verschweißung eine Manipulation versucht wird, indem der Sicherheitsbeutel an der Schweißnaht geschlitzt wird und anschließend die beiden Folienlagen wieder miteinander verschweißt werden sollen, reicht die 1. Erweichungstemperatur des 1. Kunststoffs zwar dazu aus, die Folienlagen des Sicherheitsbeutels wieder miteinander zu verschweißen, jedoch bleibt die Abdeckung, die auf der dem Innenraum des Sicherheitsbeutels abgewandten Außenseite der Folienlagen aufgebracht ist, unverschweißt, da die 2. Erweichungstemperatur des 2. Kunststoffs der Abdeckung wesentlich höher ist. Für einen außenstehenden Betrachter ist es deutlich erkennbar, dass die Abdeckung geschlitzt und nicht wieder verschweißt ist.

Wenn der Manipulator die Temperatur für die nachträgliche Verschweißung auf die 2. Erweichungstemperatur des 2. Kunststoffs der Abdeckung erhöht, lässt sich zwar die Abdeckung wieder verschweißen, jedoch hat dies nachteilige Einwirkungen auf den 1. Kunststoff der Folienlagen. Der 1. Kunststoff der Folienlagen kann bei einer übermäßig hohen Temperatur außergewöhnlichen Verformungen unterliegen oder sogar verbrennen oder sich verflüssigen. Diese Beschädigungen sind von einem außenstehenden Betrachter ebenfalls gut wahrzunehmen.

Vorzugsweise ist vorgesehen, dass die 2. Erweichungstemperatur des 2. Kunststoff der Abdeckung größer oder gleich einer Zersetzungstemperatur des 1. Kunststoffs der Folienlagen ist. Als Zersetzungstemperatur wird diejenige Temperatur bezeichnet, bei der der 1. Kunststoff verbrennt oder pyrolysiert und zerfällt.

Als 1. Kunststoff der Folienlagen kann beispielsweise Polyethylen (PE) und als 2. Kunststoff der Abdeckung beispielsweise Polyprophylen (PP) oder Polyethylentherapthalat (PET) verwendet werden.

Alternativ kann vorgesehen sein, dass als 1. Kunststoff der Folienlagen Polyprophylen (PP) und als 2. Kunststoff der Abdeckung Polyehtylentherapthalat (PET) verwendet wird.

Die Abdeckung überdeckt die Folienlagen außenseitig zumindest in demjenigen Bereich, in dem innerhalb des Tresors die Schweißnaht ausgebildet wird, wobei in der Schweißnaht infolge des 1. Thermoindikators ein Farbumschlag erfolgt. Damit ein Benutzer diesem Farbumschlag zuverlässig erkennen kann, kann in Weiterbildung der Erfindung vorgesehen sein, dass die Abdeckung zumindest abschnittsweise lichtdurchlässig ist, so dass der darunterliegende 1. Thermoindikator zumindest teilweise von außen sichtbar ist.

Die Abdeckung kann in ihrer Gesamtheit transparent oder lichtdurchlässig sein, es ist jedoch auch möglich, die Abdeckung nur abschnittsweise mit transparenten bzw. lichtdurchlässigen Fenstern zu versehen.

In einer möglichen Ausgestaltung der Erfindung kann vorgesehen sein, dass der 1. Thermoindikator von einer Lackschicht gebildet ist, die auf der dem Innenraum abgewandten Seite der Folienlage angeordnet ist. Insbesondere weisen beide Folienlagen auf ihrer Außenseite den 1. Thermoindikator auf.

In bevorzugter Ausgestaltung der Erfindung kann vorgesehen sein, dass die Abdeckung von einem Folienband aus dem 2. Kunststoff gebildet ist. Das Folienband wird außenseitig auf den Folienlagen im Bereich der im Tresor auszubildenden Schweißnaht fixiert und insbesondere mittels eines Klebers aufgeklebt.

Um zu verhindern, dass ein Manipulator die Abdeckung vor der Schlitzung des Sicherheitsbeutels entfernt, indem er durch Einwirkung geringer Temperaturen beispielsweise mittels eines Kältesprays die Klebwirkung des Klebers herabsetzt und die Abdeckung bzw. das Folienband abzieht, kann die Abdeckung in Weiterbildung der Erfindung einen 2. Thermoindikator aufweisen. Der 2. Thermoindikator reagiert mit einem Farbumschlag, wenn er einer Temperatur unterhalb einer vorgegebenen Indikatortemperatur ausgesetzt ist, wobei die Indikatortemperatur beispielsweise niedriger als 0°C und insbesondere niedriger als -20°C ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine Vorderansicht eines erfindungsgemäßen Sicherheitsbeutels und
- Fig. 2: den Schnitt II-II in Figur 1.

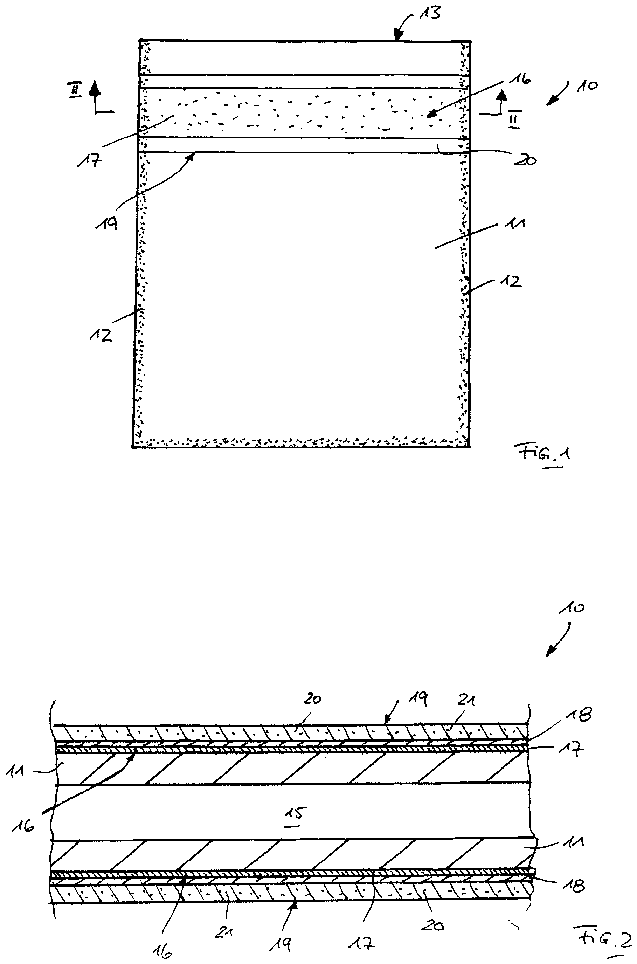

Figur 1 zeigt eine Vorderansicht eines Sicherheitsbeutels 10 aus Kunststoff, der aus zwei aufeinander angeordneten Folienlagen 11 aus einem 1. Kunststoff aufgebaut ist. Die beiden Folienlagen 11 besitzen eine rechteckige Form und sind an drei Seitenkanten mittels einer umlaufenden Schweißnaht 12 miteinander verbunden. An der 4. gemäß Figur 1 oberen Seitenkante sind die beiden Folienlagen 11 unverbunden, so dass dort eine Zugangsöffnung 13 zu einem zwischen den Folienlagen 11 gebildeten Innenraum 15 (siehe Figur 2) gebildet ist.

Auf ihrer dem Innenraum 15 abgewandten Außenseite ist auf die Folienlagen 11 jeweils in einem mit Abstand zur Zugangsöffnung 13 angeordneten Bereich und über die gesamte Breite der Sicherheitstasche 10 ein 1. Thermoindikator 16 in Form einer Lackschicht 17 aufgebracht. Der 1. Thermoindikator 16 reagiert mit einem Farbumschlag, wenn er auf eine Temperatur oberhalb einer 1. Erweichungstemperatur des 1. Kunststoffs der Folienlage 11 erwärmt wird.

Der 1. Thermoindikator 16 ist vollständig von einer Schicht eines Klebers 18 überdeckt, mit dem eine zumindest abschnittsweise transparente Abdeckung 19 aus einem 2. Kunststoff so außenseitig auf den 1. Thermoindikator 16 aufgeklebt ist, so dass der 1. Thermoindikator 16 vollständig überdeckt ist. Die Abdeckung 19 ist als Folienband 20 ausgebildet. Der 2. Kunststoff der Abdeckung 19 bzw. des Folienbands 20 besitzt eine 2. Erweichungstemperatur, die um zumindest 20°C höher als die 1. Erweichungstemperatur des 1. Kunststoffs ist.

In die Abdeckung 19 bzw. das Folienband 20 ist ein 2. Thermoindikator 21 integriert, der mit einem Farbumschlag reagiert, wenn er auf eine Temperatur unterhalb von 0°C und insbesondere unterhalb von -20°C gekühlt wird.

## Patentansprüche

1. Sicherheitsbeutel aus Kunststoff, mit zumindest zwei aufeinander angeordneten Folienlagen (11) aus einem 1. Kunststoff, die mittels einer Schweißnaht (12) unter Bildung einer Zugangsöffnung (13) zu einem zwischen den Folienlagen (11) gebildeten Innenraum (15) miteinander verbunden sind, wobei zumindest eine der Folienlagen (11) zumindest abschnittsweise einen 1. Thermoindikator (16) aufweist, der mit einem Farbumschlag reagiert, wenn er einer Temperatur oberhalb einer 1. Erweichungstemperatur des 1. Kunststoffs der Folienlagen (11) ausgesetzt ist, wobei
der 1. Thermoindikator (16) zumindest abschnittsweise von einer Abdeckung (19) aus einem 2. Kunststoff überdeckt ist, wobei eine 2. Erweichungstemperatur des 2. Kunststoffs um zumindest 20°C höher als die 1. Erweichungstemperatur des 1. Kunststoffs ist und wobei der 1. Kunststoff der Folienlagen (11) bei Einwirkung der 2. Erweichungstemperatur einer Beschädigung in Form einer Verformung und/oder einer Verbrennung und/oder einer Verflüssigung unterliegt.

2. Sicherheitsbeutel nach Anspruch 1, **dadurch gekennzeichnet, dass** die 2. Erweichungstemperatur des 2. Kunststoffs um zumindest 85°C höher als die 1. Erweichungstemperatur des 1. Kunststoffs ist.

3. Sicherheitsbeutel nach 1 oder 2, **dadurch gekennzeichnet, dass** die 2. Erweichungstemperatur des 2. Kunststoffs um zumindest 105°C höher als die 1. Erweichungstemperatur des 1. Kunststoffs ist.

4. Sicherheitsbeutel nach einem der Ansprüche 1 bis 3,
**dadurch gekennzeichnet, dass** die 2. Erweichungstemperatur des 2. Kunststoffs größer oder gleich einer Zersetzungstemperatur des 1. Kunststoffs ist.

5. Sicherheitsbeutel nach einem der Ansprüche 1 bis 4,
**dadurch gekennzeichnet, dass** der 1. Kunststoff Polyethylen (PE) und der 2. Kunststoff Polyprophylen (PP) oder Polyethylenterephthalat (PET) ist.

6. Sicherheitsbeutel nach einem der Ansprüche 1 bis 4,
**dadurch gekennzeichnet, dass** der 1. Kunststoff Polyprophylen (PP) und der 2. Kunststoff Polyethylenterephthalat (PET) ist.

7. Sicherheitsbeutel nach einem der Ansprüche 1 bis 6,
**dadurch gekennzeichnet, dass** die Abdeckung (19) zumindest abschnittsweise lichtdurchlässig ist, so dass der darunterliegende 1. Thermoindikator zumindest teilweise von außen sichtbar ist.

8. Sicherheitsbeutel nach einem der Ansprüche 1 bis 7,
**dadurch gekennzeichnet, dass** der 1. Thermoindikator (16) von einer Lackschicht (17) gebildet ist, die auf der dem Innenraum (15) abgewandten Seite der Folienlage (11) angeordnet ist.

9. Sicherheitsbeutel nach einem der Ansprüche 1 bis 8, **dadurch gekennzeichnet, dass** die Abdeckung (19) von einem Folienband (20) gebildet ist.

10. Sicherheitsbeutel nach einem der Ansprüche 1 bis 9, **dadurch gekennzeichnet, dass** die Abdeckung (19) mittels eines Klebers (18) auf den ersten Thermoindikator (16) aufgeklebt ist.

11. Sicherheitsbeutel nach einem der Ansprüche 1 bis 10, **dadurch gekennzeichnet, dass** die Abdeckung (19) einen 2. Thermoindikator (21) aufweist, der mit einem Farbumschlag reagiert, wenn er einer Temperatur unterhalb einer Indikatortemperatur ausgesetzt ist.

12. Sicherheitsbeutel nach Anspruch 11, **dadurch gekennzeichnet, dass** die Indikatortemperatur niedriger als 0°C ist.

## Claims

1. Security bag made of plastics material, comprising at least two film layers (11) arranged one on top of the other and made of a first plastics material, which layers are connected to one another by means of a weld seam (12) to form an access opening (13) to an interior (15) formed between the film layers (11), wherein at least one of the film layers (11), at least in portions, has a first thermal indicator (16) which reacts with a color change when exposed to a temperature above a first softening temperature of the first plastics material of the film layers (11), wherein the first thermal indicator (16), at least in portions, is covered by a cover (19) made of a second plastics material, wherein a second softening temperature of the second plastics material is at least 20°C higher than the first softening temperature of the first plastics material and wherein the first plastics material of the film layers (11), when exposed to the second softening temperature, is subject to damage in the form of deformation and/or combustion and/or liquefaction.

2. Security bag according to claim 1, **characterized in that** the second softening temperature of the second plastics material is at least 85°C higher than the first softening temperature of the first plastics material.

3. Security bag according to either claim 1 or claim 2, **characterized in that** the second softening temperature of the second plastics material is at least 105°C higher than the first softening temperature of the first plastics material.

4. Security bag according to any of claims 1 to 3, **characterized in that** the second softening temperature of the second plastics material is higher than or equal to a decomposition temperature of the first plastics material.

5. Security bag according to any of claims 1 to 4, **characterized in that** the first plastics material is polyethylene (PE) and the second plastics material is polypropylene (PP) or polyethylene terephthalate (PET).

6. Security bag according to any of claims 1 to 4, **characterized in that** the first plastics material is polypropylene (PP) and the second plastics material is polyethylene terephthalate (PET).

7. Security bag according to any of claims 1 to 6, **characterized in that** the cover (19), at least in portions, is translucent, so that the underlying first thermal indicator is at least partially visible from the outside.

8. Security bag according to any of claims 1 to 7, **characterized in that** the first thermal indicator (16) is formed by a lacquer (17) which is arranged on the side of the film layer (11) facing away from the interior (15).

9. Security bag according to any of claims 1 to 8, **characterized in that** the cover (19) is formed by a film strip (20).

10. Security bag according to any of claims 1 to 9, **characterized in that** the cover (19) is glued onto the first thermal indicator (16) by means of an adhesive (18).

11. Security bag according to any of claims 1 to 10, **characterized in that** the cover (19) has a second thermal indicator (21) which reacts with a color change when exposed to a temperature below an indicator temperature.

12. Security bag according to claim 11, **characterized in that** the indicator temperature is lower than 0°C.

## Revendications

1. Sac de sécurité en matière plastique, comportant au moins deux couches de film (11) disposées l'une sur l'autre et constituées d'une première matière plastique, lesquelles sont reliées entre elles au moyen d'un cordon de soudure (12) en formant une ouverture d'accès (13) à un espace intérieur (15) formé entre les couches de film (11), au moins une des couches de film (11) présentant, au moins par sections, un premier indicateur thermique (16) qui réagit avec un changement de couleur lorsqu'il est exposé à une température supérieure à une première température de ramollissement de la première matière plastique des couches de film (11), le premier indicateur thermique (16) étant recouvert, au moins par sections, d'un couvercle (19) constitué d'une seconde matière plastique, une seconde température de ramollissement de la seconde matière plastique étant supérieure d'au moins 20 °C à la première température de ramollissement de la première matière plastique et la première matière plastique des couches de film (11), sous l'effet de la seconde température de ramollissement, étant sujette à un endommagement sous forme de déformation et/ou de combustion et/ou de liquéfaction.

2. Sac de sécurité selon la revendication 1, **caractérisé en ce que** la seconde température de ramollissement de la seconde matière plastique est supérieure d'au moins 85 °C à la première température de ramollissement de la première matière plastique.

3. Sac de sécurité selon 1 ou 2, **caractérisé en ce que** la seconde température de ramollissement de la seconde matière plastique est supérieure d'au moins 105 °C à la première température de ramollissement de la première matière plastique.

4. Sac de sécurité selon l'une des revendications 1 à 3, **caractérisé en ce que** la seconde température de ramollissement de la seconde matière plastique est supérieure ou égale à une température de décomposition de la première matière plastique.

5. Sac de sécurité selon l'une des revendications 1 à 4, **caractérisé en ce que** la première matière plastique est du polyéthylène (PE) et la seconde matière plastique est du polypropylène (PP) ou du polyéthylènetéréphtalate (PET).

6. Sac de sécurité selon l'une des revendications 1 à 4, **caractérisé en ce que** la première matière plastique est du polypropylène (PP) et la seconde matière plastique est du polyéthylènetéréphtalate (PET).

7. Sac de sécurité selon l'une des revendications 1 à 6, **caractérisé en ce que** le couvercle (19) est translucide au moins par sections, de sorte que le premier indicateur thermique situé en-dessous est au moins partiellement visible de l'extérieur.

8. Sac de sécurité selon l'une des revendications 1 à 7, **caractérisé en ce que** le premier indicateur thermique (16) est formé par une couche de laque (17) qui est disposée sur le côté de la couche de film (11) opposé à l'espace intérieur (15).

9. Sac de sécurité selon l'une des revendications 1 à 8, **caractérisé en ce que** le couvercle (19) est formé par une bande de film (20).

10. Sac de sécurité selon l'une des revendications 1 à 9, **caractérisé en ce que** le couvercle (19) est collé sur le premier indicateur thermique (16) au moyen d'un adhésif (18).

11. Sac de sécurité selon l'une des revendications 1 à 10, **caractérisé en ce que** le couvercle (19) présente un second indicateur thermique (21) qui réagit avec un changement de couleur lorsqu'il est exposé à une température inférieure à une température d'indicateur.

12. Sac de sécurité selon la revendication 11, **caractérisé en ce que** la température d'indicateur est inférieure à 0 °C.
